# EUROPÄISCHE PATENTSCHRIFT

(11) **EP 0 607 205 B1**
(45) Veröffentlichungstag und Bekanntmachung des Hinweises auf die Patenterteilung: **22.05.1996**
(21) Anmeldenummer: 92920555.7
(22) Anmeldetag: 02.10.1992
(51) Int. Cl.: C08F 265/06, C08F 265/04, C08F 257/02, C08F 285/00, C09D 17/00, C09D 151/00

(54) **WASSERVERDÜNNBARES EMULSIONSPOLYMERISAT, VERFAHREN ZUR HERSTELLUNG DES WASSERVERDÜNNBAREN EMULSIONSPOLYMERISATES, WASSRIGE BESCHICHTUNGSZUSAMMENSETZUNG AUF BASIS DES EMULSIONSPOLYMERISATES SOWIE DESSEN VERWENDUNG ALS REIB- UND DISPERGIERHARZ SOWIE ALS BINDEMITTEL FÜR PHYSIKALISCH TROCKNENDE LACKE**
WATER-DILUTABLE EMULSION POLYMERISATE, PROCESS FOR PRODUCING IT, AQUEOUS COATING COMPOSITION BASED ON THE EMULSION POLYMER AND ITS USE AS A GRINDING AND DISPERSING RESIN AND AS A BINDER FOR PHYSICALLY-DRYING PAINTS
POLYMERISATS EN EMULSION DILUABLES A L'EAU, LEUR PROCEDE DE FABRICATION, COMPOSITIONS AQUEUSES DE REVETEMENT A BASE DE POLYMERISATS EN EMULSION, ET LEUR UTILISATION COMME RESINES A BROYER ET DE DISPERSION ET COMME LIANTS POUR VERNIS A SECHAGE PHYSIQUE

(30) Priorität: 10.10.1991 BR 9104402
(43) Veröffentlichungstag der Anmeldung: 27.07.1994
(73) Patentinhaber: BASF S/A, 09844-900 Sao Bernardo do Campo-SP (BR)
(72) Erfinder: PFAFFENSCHLAGER, Arthur, 04565-Sao Paulo, SP (BR); MARQUES PEREIRA, Antonio, Manoel, 01046-Sao Paulo, SP (BR); MARQUES CANABRAVA, Wilson, 01046-Sao Paulo, SP (BR)
(74) Vertreter: Münch, Volker, Dr.
(86) Internationale Anmeldenummer: EP9202282
(87) Internationale Veröffentlichungsnummer: WO9307191

(56) Entgegenhaltungen:
- EP-A- 0 009 258
- EP-A- 0 332 011
- US-A- 4 150 005

## Beschreibung

Wasserverdünnbares Emulsionspolymerisat, Verfahren zur Herstellung des wasserverdünnbaren Emulsionspolymerisates, wäßrige Beschichtungszusammensetzung auf Basis des Emulsionspolymerisates sowie dessen Verwendung als Reib- und Dispergierharz sowie als Bindemittel für physikalisch trocknende Lacke

Die Erfindung betrifft ein wasserverdünnbares Emulsionspolymerisat, welches hergestellt wird durch eine mehrstufige Emulsionspolymerisation von ethylenisch ungesättigten Monomeren in wäßriger Phase in Gegenwart eines Emulgators oder mehrerer Emulgatoren und eines oder mehrerer radikalbildender Initiatoren, wobei in der ersten Stufe der Emulsionspolymerisation Carboxylgruppen und Amidgruppen enthaltende ethylenisch ungesättigte Monomere polymerisiert werden und in der zweiten Stufe der Emulsionspolymerisation in Gegenwart des in der ersten Stufe hergestellten Emulsionspolymerisates ethylenisch ungesättigte Monomere ohne weitere funktionelle Gruppen polymerisiert werden.

Die Erfindung betrifft weiterhin ein Verfahren zur Herstellung des wasserverdünnbaren Emulsionspolymerisats, Beschichtungsmittel auf Basis des Emulsionspolymerisats sowie dessen Verwendung.

Primärdispersionen haben sich für den Einsatz als Reibharze in Pigmentpasten aufgrund der hohen mechanischen Beanspruchung in Mahlprozessen als unbrauchbar erwiesen, da die Primärdispersionen häufig während der Mahlvorgänge koagulieren. Darüber hinaus sind Primärdispersionen im allgemeinen hinsichtlich ihrer Pigmentbenetzungsfähigkeit lösungshaltigen Überzugsmitteln auf Alkydharz-, Acrylatharz- und Epoxyesterharzbasis sowie bekannten Mischungen aus wasserlöslichen Alkydharzen und Sekundärdispersionen auf Polyacrylatbasis unterlegen.

Emulsionspolymerisate, die durch eine mehrstufige Emulsionspolymerisation hergestellt werden, sind bekannt. So sind beispielsweise aus der EP-A-332 011 Polymerisate bekannt, die durch stufenweise Emulsionspolymerisation in Gegenwart üblicher wasserlöslicher radikalbildender Polymerisationsinitiatoren und üblicher Emulgatoren gebildet werden, wobei in der ersten und der zweiten Emulsionsstufe u.a. olefinisch ungesättigte Carbonsäuren polymerisiert werden. Gemäß der EP-A-332 011 werden die erhaltenen Dispersionen in Holzlacken eingesetzt. Sie sind jedoch als Reibharze für Pigmentpasten ungeeignet, da Lacke auf Basis der beschriebenen Emulsionen im allgemeinen unmittelbar nach der Pigmentanreibung koagulieren.

Die US 4,150,005 betrifft Zweistufenemulsionspolymerisate, zu deren Herstellung in einer ersten Stufe mindestens 10 Gew.-%, bezogen auf das Gesamtgewicht der Monomeren in der ersten Stufe, hydrophile Monomere, und zwar hydrophile ionische Monomere und nichtionische hydrophile Monomere, wie Acrylamide oder Hydroxyalkylester α,β-ungesättigter Säuren, polymerisiert werden. In der zweiten Stufe der Emulsionspolymerisation werden Monomere ohne weitere funktionelle Gruppen, wie z.B. Methylmethacrylat und Styrol verwendet. Die gebildeten Polymer-Latices sind verwendbar als Überzugsmittel, Klebstoffe und Bindemittel, z.B. zur Fußbodenbeschichtung. Die aus der US-PS 4,150,005 bekannten Emulsionen sind geeignet für Mahlprozesse, ihr Pigmentbenetzungsvermögen ist jedoch unzureichend. Dies hat zur Folge, daß der Glanz der aus ihnen hergestellten Lacke stark verbesserungsbedürftig ist und die Überzugsmittel nur für matte Beschichtungen einsetzbar sind. Darüber hinaus sind die aus der US 4,150,005 bekannten Überzugsmittel ungeeignet zur Beschichtung von Metallsubstraten, da die Haftung zum Substrat unzureichend ist und die Überzugsmittel hinsichtlich Elastizität verbesserungsbedürftig sind.

Die der Erfindung zugrunde liegende Aufgabe bestand darin, wäßrige Beschichtungsmittel zu entwickeln, die ein gutes Pigmentbenetzungsvermögen aufweisen und damit als Reibharze für Pigmentpasten einsetzbar sind. Außerdem sollten die Dispersionen für Mahlprozesse geeignet sein und sich als Bindemittel für physikalisch trocknende Beschichtungsmittel eignen. Sie sollten als Bindemittel in Beschichtungsmitteln insbesondere für metallische Substrate, Holz und mineralische Substrate geeignet sein.

Die der Anmeldung zugrunde liegende Aufgabe wird gelöst durch wasserverdünnbare Emulsionspolymerisate der eingangs genannten Art, die dadurch gekennzeichnet sind, daß in der erste Stufe der Emulsionspolymerisation
(a1) 0,5 bis 5,0 Gew.-%, bevorzugt 1,0 bis 3,0 Gewichts-%, Carboxylgruppen enthaltende ethylenisch ungesättigte Monomere und
(a2) 0,5 bis 2,5 Gew.-%, bevorzugt 1,0 bis 2,0 Gew.-% olefinisch ungesättigte Carbonsäureamide,
wobei insgesamt 1,0 bis 8,0 Gew.-%, bevorzugt 2,0 bis 5,0 Gew.-% hydrophile ionische und hydrophile nichtionische olefinisch ungesättigte Monomere eingesetzt werden,
sowie
(b) 92,0 bis 99,0 Gew.-%, bevorzugt 95,0 bis 98,0 Gew.-%, weitere ethylenisch ungesättigte Monomere, die mit den zuvor genannten hydrophilen ethylenisch ungesättigten Monomeren copolymerisierbar sind und keine weiteren funktionellen Gruppen enthalten,
polymerisiert werden, wobei die Summe der Monomeren in der ersten Stufe 100 Gew.-% beträgt,
und in der zweiten Stufe der Emulsionspolymerisation ausschließlich olefinisch ungesättigte Monomere ohne weitere funktionelle Gruppen polymerisiert werden und das Gewichtsverhältnis der in der ersten Stufe polymerisierten Monomeren zu den in der zweiten Stufe polymerisierten Monomeren 30 - 80 % : 20 - 70 Gew.-% beträgt.

Die vorliegende Erfindung betrifft auch ein Verfahren zur Herstellung der zuvor erwähnten wasserverdünnbaren Emulsionspolymerisate, wobei die Emulsionspolymerisation bei Temperaturen im Bereich vo 20°C bis 100°C, vorzugsweise im Bereich von 80°C bis 95°C, durchgeführt wird.

Die erfindungsgemäßen Emulsionspolymerisate werden durch eine zweistufige oder höherstufige Emulsionspolymerisation in wäßrigem Medium in bekannten Apparaturen, beispielsweise in einem Rührkessel mit Heiz- und Kühlvorrichtungen, hergestellt.

Die Zugabe der Monomeren kann in der Weise erfolgen, daß eine Lösung aus dem gesamten Wasser, dem Emulgator und einem Teil des Initiators vorgelegt wird und das Monomer bzw. das Monomerengemisch und getrennt davon, aber parallel dazu der Rest des Initiators bei der Polymerisationstemperatur langsam zugegeben wird. Es ist allerdings bevorzugt, einen Teil des Wassers und des Emulgators vorzulegen und aus dem Rest des Wassers und des Emulgators und aus dem Monomerengemisch eine Präemulsion herzustellen, die bei der Polymerisationstemperatur langsam zugegeben wird, wobei der Initiator wiederum getrennt zugegeben wird. Es ist auch möglich, in der ersten Stufe das Monomerengemisch in Form einer Präemulsion zuzugeben und in der zweiten Stufe das Monomer bzw. Monomerengemisch in Substanz, d.h. ohne Wasser und Emulgator zuzugeben und den Initiator getrennt, aber parallel dazu zuzugeben.

Die Polymerisationstemperatur liegt im Bereich von 20°C bis 100°C, vorzugsweise im Bereich von 80°C bis 95°C.

Das Mengenverhältnis zwischen den Monomeren und dem Wasser kann so ausgewählt werden, daß die resultierende Dispersion einen Feststoffgehalt von 30 bis 60 Gewichts-%, vorzugsweise 35 bis 55 Gewichts-%, aufweist.

Als Emulgatoren können anionisch und/oder nichtionische Emulgatoren verwendet werden.
Beispiele für anionische Emulgatoren sind Alkali- oder Ammoniumsalze von Schwefelsäurehalbestern von Alkylphenolen oder von Alkoholen, ferner die Schwefelsäurehalbester von oxyethylierten Alkylphenolen oder oxyethylierten Alkoholen. Bevorzugt werden Alkalisalze von Schwefelsäurehalbestern von mit 23 Mol Ethylenoxid pro Mol umgesetztem Nonylphenol, Alkyl- oder Arylsulfonat, Natriumlaurylsulfat, Natriumlaurylethoxylatsulfat sowie das Alkalisalz von Diestern der Sulfobernsteinsäure mit Alkoholen mit 6 bis 20 Kohlenstoffatomen eingesetzt. Die bevorzugt verwendeten nichtionischen Emulgatoren sind Ether von mit 5 bis 23 Mol Ethylenoxid umgesetzten Nonylphenolen.

Als Initiatoren für die Emulsionspolymerisation eignen sich die üblichen anorganischen Peroxodisulfate, bevorzugt Kaliumperoxodisulfat und Ammoniumperoxodisulfat, sowie Ammonium- oder Alkalimetallperoxydiphosphate. Es können auch Redoxinitiatoren eingesetzt werden, beispielsweise Wasserstoffperoxid, Benzoylperoxid, organische Perester, wie Perisopivalat, in Kombination mit wasserlöslichen Reduktionsmitteln, wie z.B. Ascorbinsäure, Schwefelverbindungen, Triethylamin, Natriumdisulfit, Hydrazin, Hydroxylamin, Glykolsäure und Weinsäure.
Die Initiatoren sind wasser- oder monomerlöslich.

Vorzugsweise werden bei der Emulsionspolymerisation Regler, z.B. Mercaptane oder Polyhalogenverbindungen, eingesetzt. Die Regler werden bevorzugt in allen Stufen der Emulsionspolymerisation eingesetzt.

Beispiele für geeignete Carboxylgruppen enthaltende Monomere (a1) sind Acrylsäure, Methacrylsäure, Maleinsäure, Maleinsäureanhydrid, Fumarsäure, Itakonsäure. Besonders geeignet sind Acryl- und Methacrylsäure.

Als olefinisch ungesättigte Carbonsäureamide (a2) kommen in Frage Alkyl- und substituierte Alkylamide von Acrylsäure und Methacrylsäure, Mono- und Diamide von Malein-, Fumar- und Itakonsäure, Acryl- und Methacrylamide, Alkoxyalkylacrylamide, Alkoxyalkylmethacrylamide und N-Methylolacrylamide. Als Beispiele sind zu nennen: Acrylamid, Methacrylamid, Di-N-Methylacrylamid, Diacetonacrylamid, N-Isopropylacrylamid, N-Isopropylmethacrylamid, N-tert.-Butylacrylamid, N-tert.-Octylacrylamid, Butoxymethylacrylamid, Butoxymethylmethacrylamid.

Insgesamt werden erfindungsgemäß in der ersten Stufe der Emulsionspolymerisation 1,0 bis 8,0 Gewichts-%, bevorzugt 2,0 bis 5,0 Gew.-%, hydrophile ionische und hydrophile nichtionische Monomere, bezogen auf das Gesamtgewicht der in der ersten Stufe der Emulsionspolymerisation eingesetzten Monomeren, polymerisiert. Unter hydrophilen ionischen Monomeren sind die als Komponente (a1) verwendeten Carboxylgruppen enthaltenden Monomeren zu verstehen; während unter hydrophilen nichtionischen Monomeren die als Komponente (a2) einsetzbaren ungesättigten Carbonsäureamide und Hydroxyalkylester α,β-ungesättigter Carbonsäuren verstanden werden sollen. Als Beispiele für die OH-Gruppen enthaltenden Monomeren werden genannt: 2-Hydroxyethylacrylat, 2-Hydroxypropylacrylat, 3-Hydroxypropylacrylat, 2-Hydroxypropylmethacrylat, 3--Hydroxypropylmethacrylat, 2-Hydroxyethylmethacrylat, 4-Hydroxybutylacrylat, 4-Hydroxybutylmethacrylat, 6-Hydroxyhexylacrylat, p-Hydroxycyclohexylacrylat, p-Hydroxycyclohexylmethacrylat, Hydroxypolyethylenglykolacrylat, Hydroxypolyethylenglykolmethacrylat, Hydroxypolypropylenglykolacrylat, Hydroxypolypropylenglykolmethacrylat usw.. Insgesamt werden in der ersten Stufe der Emulsionspolymerisation maximal 7 Gew.-% Hydroxyalkylester α,β-ungesättiger Säuren, bezogen auf das Gesamtgewicht der Monomeren der ersten Stufe, verwendet.

Als Beispiele für geeignete Monomere (b), die mit den hydrophilen ethylenisch ungesättigten Monomeren copolymerisierbar sind und keine weiteren funktionellen Gruppen aufweisen, können genannt werden. Vinylaromatische Kohlenwasserstoffe, wie Styrol, α-Methylstyrol und Vinyltoluol, Vinylacetat, Ester der Acrlysäure oder Methacrylsäure, insbesondere aliphatische und cycloaliphatische Acrylate oder Methacrylate mit bis zu 20 Kohlenstoffatomen im Alkoholrest, wie z.B. Methyl-, Ethyl-, Propyl-, Butyl-, Hexyl-, Ethylhexyl-, Stearyl-, Lauryl- und cyclohexylacrylat oder -methacrylat.

Vorteilhafterweise werden in der ersten Stufe der Emulsionspolymerisation als Komponente (b) bis zu 2,0 Gew.-%, bezogen auf das Gesamtgewicht der Monomeren der ersten Stufe, mehrfach ethylenisch ungesättigte Monomere verwendet. Als Beispiele hierfür seien Allylester ungesättigter Carbonsäuren, wie z.B. Allylmethacrylat, Diallylmaleat, Diallylester mehrwertiger Carbonsäuren, wie Diallylphthalat und Hexandioldiacrylat, Hexandioldimethacrylat, Glykoldiacrylat, Glykoldimethacrylat, Butandioldiacrylat, Butandioldimethacrylat, Trimethylolpropantriacrylat, Trimethylolpropantrimethacrylat und Divinylbenzol genannt. Bevorzugt wird Allylmethacrylat eingesetzt.

In Gegenwart des in der ersten Stufe der Emulsionspolymerisation gebildeten Polymers werden in der zweiten Stufe der Emulsionspolymerisation ausschließlich olefinisch ungesättigte Monomere ohne weitere funktionelle Gruppen umgesetzt. Als in der zweiten Stufe der Emulsionspolymerisation einsetzbare Monomere können genannt werden: vinylaromatische Kohlenwasserstoffe, wie Styrol, α-Methylstyrol, Vinyltoluol, Vinylacetat, Ester der Acryl- oder Methacrylsäure, insbesondere aliphatische und cycloaliphatische Acrylate oder Methacrylate mit bis zu 20 Kohlenstoffatomen im Alkoholrest, z.B. Methylacrylat, Methylmethacrylat, Ethylacrylat, Ethylmethacrylat, Propylacrylat, Propylmethacrylat, Butylacrylat, Butylmethacrylat, Hexylacrylat, Hexylmethacrylat, Ethylhexylacrylat, Stearylacrylat, Stearylmethacrylat, Laurylacrylat, Laurylmethacrylat, Cyclohexylacrylat, cyclohexylmethacrylat.

Unter Monomere ohne weitere funktionelle Gruppen sollen Monomere verstanden werden, die im wesentlichen frei sind von funktionellen Gruppen, wie Hydroxyl-, Carboxyl- und Amidgruppen. Dies schließt jedoch nicht aus, daß die eingesetzten Monomeren geringe Mengen (z.B. durch Verunreinigungen) an Hydroxyl- oder Säuregruppen aufweisen.

Das Gewichtsverhältnis der in der ersten Stufe eingesetzten Monomeren zu den in der zweiten Stufe der Emulsionspolymerisation eingesetzten Monomeren beträgt 30 - 80 Gew.-% : 20 - 70 Gew.-%.

Besonders gute Eigenschaften des Emulsionspolymerisates bzw. der daraus hergestellten Überzugsmittel bzw. Reibharze werden erzielt, wenn in der ersten Stufe der Emulsionspolymerisation Mischungen aus Acrylsäure, Acrylamid, Styrol, n-Butylacrylat und Methylmethacrylat und in der zweiten Stufe der Emulsionspolymerisation n-Butylacrylat und Styrol verwendet werden.

Eine weitere Ausführungsform der vorliegenden Erfindung besteht darin, daß sich an die zweite Emulsionspolymerisationsstufe noch eine weitere bzw. noch mehrere weitere Polymerisationsstufen anschließen. Erfindungswesentlich ist in jedem Fall, daß in dieser weiteren Stufe bzw. in diesen weiteren Polymerisationsstufen ausschließlich olefinisch ungesättigte Monomere ohne weitere funktionelle Gruppen eingesetzt werden. Das Gewichtsverhältnis der Monomeren der ersten Polymerisationsstufe zu dem Gesamtgewicht der Monomeren der in den nachfolgenden Polymerisationsstufen polymerisierten Monomeren liegt in diesen Fällen im Bereich von 20 - 80 Gew.-% : 20 - 80 Gew.-%.

Die erfindungsgemäß durch eine mehrstufige Emulsionspolymerisation erhaltenen Emulsionen werden mit Ammoniak und/oder Aminen, vorteilhafterweise in Form einer wäßrigen Lösung des Neutralisationsmittels, neutralisiert. Als Neutralisationsmittel eignen sich neben NH₃ Alkylamine, wie zum Beispiele Di-, Triethylamin oder N-Methylmorpholin oder Alkanolamine, wie zum Beispiel Dimethylethanolamin.

Die hergestellten Emulsionen weisen Teilchengrößen im Bereich von 150 bis 450 nm, vorteilhafterweise im Bereich von 180 bis 240 nm auf (Ultrazentrifuge). Die Teilchengrößenverteilung ist dadurch gekennzeichnet, daß mindestens 85 % der Teilchen ein Teilchengrößenverhältnis (Massenverhältnis) von (D 90-D10)/D50 von maximal 0,13 aufweisen (Ultrazentrifuge). Im Dichtegradientenlauf H₂O/D₂O (Ultrazentrifuge) weisen die Teilchen eine streng einheitliche Teilchendichte auf.

Die hergestellten Emulsionen können noch ggf. mit üblichen organischen Lösemitteln verdünnt werden, so daß sie im allgemeinen einen Festkörperanteil von 15 bis 45 Gew.-% erreichen.

Die Erfindung betrifft auch Beschichtungszusammensetzungen, die als filmbildendes Bindemittel die zuvor beschriebenen wasserverdünnbaren, neutralisierten Emulsionspolymerisate enthalten. Die Beschichtungszusammensetzungen enthalten übliche Füllstoffe und Hilfsmittel sowie ggf. organische Lösemittel und Pigmente. Als Hilfsmittel seien Verlaufsmittel und Verdicker genannt.
Beispiele für geeignete Füllstoffe sind Kaolin, Talkum, Glimmer, Quarzmehl und Bariumsulfat.

Beispiele für geeignete Pigmente sind Ruß, Eisenoxid, Chromoxid, Titandioxid, Blei- und Strontiumchromat. Es können auch Metallpigmente sowie farbgebende Pigmente auf organischer Basis eingesetzt werden.

Die Beschichtungszusammensetzungen können zusätzlich übliche organische Lösemittel in Mengen von 2 bis 10 Gewichts-%, bezogen auf das Gesamtgewicht der Zusammensetzung, enthalten. Als organische Lösemittel kommen beispielsweise Alkohole, insbesondere Glykolether, in Frage.

Als Hilfsmittel können je nach Anwendung der Emulsionen Verdickungsmittel, Verlaufsmittel und ggf. UV-Absorber eingesetzt werden. Geeignete Verdicker sind beispielsweise pyrogenes Siliciumdioxid, modifizierte Aluminiumsilikate, hydriertes Rizinusöl, Aluminiumstearat und Verbindungen mit Polyamidstrukturen. Geeignete Verlaufsmittel sind hochsiedende Lösemittel, Silikonöle und Weichharze mit guter Verträglichkeit.

Die erfindungsgemäßen mehrstufig hergestellten Emulsionen lassen sich problemlos dispergieren bzw. vermahlen unter Einsatz von Dispergieraggregaten, wie Dissolver, Kneter, Rührwerksmühlen, Kugelmühlen und Perlmühlen, ohne daß eine Koagulation auftritt. Sie sind daher geeignet als Dispergier- und Mahlharze in Dispergier- bzw. Mahlvorgängen. Die vorliegende Erfindung betrifft daher die Verwendung der wasserverdünnbaren Mehrstufenpolymerisatemulsionen als Dispergierharze bzw. Mahlharze in Dispergier- bzw. Mahlvorgängen. Da die Emulsionen ein ausgezeichnetes Pigmentbenetzungsvermögen aufweisen, sind sie besonders gut geeignet als Reibharze für Pigmentpasten. Die erfindungsgemäßen Emulsionen sind hervorragend geeignet als physikalisch trocknende Beschichtungsmittel, zum Beispiel zur Beschichtung von Holzsubstraten, Metallsubstraten, mineralischen Untergründen. Beschichtungsmittel auf Basis der mehrstufig hergestellten Emulsionen trocknen schnell, und die aus ihnen resultierenden Beschichtungen weisen einen hohen Glanz, eine hervorragende Wasserbeständigkeit und Chemikalienbeständigkeit auf. Die erfindungsgemäßen Beschichtungsmittel eignen sich insbesondere als Holzlacke, und zwar als Klarlacke und Lasuren sowie als Lacke für den Industrie- und den Bautenbereich.

Nachfolgend wird die Erfindung anhand von Ausführungsbeispielen näher erläutert:
Teile bedeuten Gewichtsteile, sofern nichts anderes angegeben wird:

### Beispiel 1 Herstellung einer Zweistufenpolymerisatemulsion

640 Teile deionisiertes Wasser, 9,7 Teile Nonylphenylether-23 EO (UX Ultrapon® NF 230 L der Firma Ultraquimica, Emulgator 1) sowie 0,3 Teile Ameisensäure werden vorgelegt und auf 90°C erwärmt. In einem Zulaufgefäß bereitet man aus 229 Teilen deionisiertem Wasser, 38,3 Teile Nonylphenol-23 EO-Na-sulfat (Disponil® 25 S der Firma Henkel, Emulgator 2), 4,7 Teilen Natriumallylethersulfonat (Cops® 1 der Firma Alcolac), 427 Teilen Styrol, 258,4 Teilen Butylacrylat, 163,2 Teilen Methylmethacrylat, 21,8 Teilen Acrylsäure und 13,2 Teilen Acrylamid eine Emulsion. 10 % dieser Emulsion werden zur Vorlage gegeben. Dann werden 0,9 Teile Kaliumperoxodisulfat in 36 Teilen deionisiertem Wasser innerhalb von 5 Minuten zugegeben. Es tritt eine exotherme Reaktion ein. Die Reaktionstemperatur wird zwischen 90°C und 93°C gehalten. 15 Minuten nach Beendigung der Zugabe der Kaliumperoxodisulfat-Lösung werden die restlichen 90 % der Emulsion innerhalb von 2 Stunden zugegeben. Gleichzeitig wird eine Lösung von 3,5 Teilen Kaliumperoxodisulfat in 140 Teilen deionisiertem Wasser innerhalb 2 h 15 min zugegeben, wobei die Reaktionstemperatur bei 89 - 91°C gehalten wird. Nach Beendigung der Zugabe wird noch 15 min. bei 90°C gehalten und anschließend mit der Zugabe einer zweiten Emulsion, die man aus 172 Teilen deionisiertem Wasser, 8,2 Teilen Emulgator 2, 2,7 Teilen Na-allylethersulfonat (Cops® 1 der Firma Alcolac), 223 Teilen Styrol, 228 Teilen Butylacrylat und 1 Teil n-Dodecylmercaptan bereitet, begonnen. Gleichzeitig 5 wird eine Lösung von 2,6 Teilen Kaliumperoxodisulfat in 65 Teilen deionisiertem Wasser innerhalb 90 min zugegeben. Die Zugabe der Emulsion erfolgt innerhalb 60 min., wobei die Reaktionstemperatur im Bereich von 89 - 90°C gehalten wird. Nach Beendigung der Zugabe der Kaliumperoxodisulfat-Lösung hält man noch 30 min bei 90°C und kühlt schließlich ab. Sobald 50°C erreicht sind, wird mit 18,2 Teilen 25 %iger Ammoniaklösung neutralisiert und mit 96 Teilen deionisiertem Wasser komplettiert. Die erhaltene Emulsion zeigt folgende Kenndaten:
FK 46,6 %
pH 8,7
Viskosität (Brookfield Viskosimeter) 2600 mPas (23°C)
LD (440 nm) 42 %

### Beispiel 2

analog Beispiel 1, jedoch mit zusätzlich 5,3 Teilen Allylmethacrylat in der ersten Emulsion.

Die Emulsion zeigt folgende Kenndaten:
FK 47,5 %
pH 8,8
Viskosität (Brookfield Viskosimeter) 4500 mPas (23°C)
LD (440 nm) 46 %

Verwendung der in Beispiel 1 hergestellten Emulsion:

### Beispiel 3: Wasserverdünnbarer Lack für Metalloberflächen

12,9 Teile der im Beispiel 1 beschriebenen Emulsion werden mit 3,6 Teilen Butylglykol, 0,2 Teilen Collacral® P (BASF AG), 12 Teilen deionisiertem Wasser, 2,8 Teilen Ruß, 1,9 Teilen Strontiumchromat, 2,5 Teilen Aluminiumsilikat in einem Dissolver dispergiert. Die resultierende Paste wird anschließend in einer Glasperlenmühle gemahlen. Dann wird mit 46,5 Teilen der in Beispiel 1 hergestellten Emulsion, 4 Teilen Dowanol® PPH (DOW Chemicals), einem Verdickungsmittel (Collacral® der BASF AG) und deionisiertem Wasser komplettiert.

### Vergleichsbeispiel 1: Wasserverdünnbarer Lack (schwarz) für Metalloberflächen

8,6 Teile eines handelsüblichen, kurzöligen, wasserlöslichen Alkydharzes aus Rizinenfettsäuren, Hydroxypivalinsäureneopentylglycolester, Trimethylolpropan, Isophthalsäure und Trimellithsäureanhydrid mit einer Öllänge von 30 % und mit einer Säurezahl von 52 - 60 mg KOH/g und einem Festkörper von 80 Gew.-% in Butylglykol werden mit 2 Teilen Butylglykol, Dimethylethanolamin, 1,1 Teilen Co-octoat, einem Verlaufsadditiv (Collacral® P der BASF AG), 3,0 Teilen Ruß, 2,0 Teilen Strontiumchromat, 2,7 Teilen Aluminiumsilikat und 14,3 Teilen deionisiertem Wasser in einem Dissolver dispergiert. Die erhaltene Paste wird in einer Glasperlenmühle gemahlen. Dann wird mit 50,7 Teilen einer handelsüblichen Primärdispersion (z.B. Acronal® 290 D der Firma BASF AG Dowlatex® DL 209 der Firma DOW Chemicals), Dowanol® PPH (Dow Chemicals), Verdicker (Collacral® P der BASF AG) und deionisiertem Wasser komplettiert.

| | Bsp. 3 | Vergleichsbsp. 1 |
|---|---|---|
| Trocknung bei 25°C | 15 min. | 30 - 35 min. |
| Glanz 60° Winkel | 50 | 50 |
| Wasserdampfresist. 40°C, 240 h | 1 | 2 - 3 |
| Salzprühtest 240 h, Znphosphat | 1 - 2 | 2 |
| Resistenz Bremsflüssigkeit Tauchung, 24 h, 25°C | 1 | 3 |
| Notenskala: 1 = ausgezeichnet 5 = unbrauchbar | | |

### Vergleichsbeispiel 2:

Die im Beispiel 1 der US 4,150,005 beschriebene Emulsion wurde nachgearbeitet. Aus der erhaltenen Dispersion wurde analog dem Beispiel 1 ein wasserverdünnbarer Lack hergestellt. Die nachfolgende Tabelle faßt die Ergebnisse des Vergleichsbeispiels 2 und des Beispiels 1 zusammen:

| | Bsp. 3 | Vergleichsbsp. 2 |
|---|---|---|
| Trocknung bei 25°C | 15 min. | 15 min. |
| Glanz 60° Winkel | 50 | 35 |
| Wasserdampfresist. 40°C, 240 h | 1 | 2 |
| Salzprühtest 240 h, Znphosphat | 1 - 2 | 1 - 2 |
| Resistenz Bremsflüssigkeit Tauchung, 24 h, 25°C | 1 | 1 |
| Notenskala: 1 = ausgezeichnet 5 = unbrauchbar | | |

### Vergleichsbeispiel 3:

Das Beispiel 1 der EP-A-332 011 wurde nachgearbeitet. Die erhaltenen Emulsion ist als Reibharz ungeeignet, da sie unmittelbar nach der Pigmentanreibung koagulierte.

### Beispiel 4 Wasserverdünnbarer Lack (blau) für Metalloberflächen

23 Teile der im Beispiel 2 hergestellten Emulsion werden mit 5,1 Teilen Butylglykol, 0,2 Teilen eines Verlaufsadditivs, 0,2 Teilen Disperbyk® (Hersteller: Byk-Chemie), 4,0 Teilen deionisiertem Wasser, 1,97 Teilen Titandioxid, 0,1 Teilen Rotpigment (Paliogen® L-4470 der Firma BASF AG), 0,09 Teile Ruß, 0,45 Teilen des Blaupigmentes Heliogenblau® 6901 - LF der Firma BASF AG, 0,64 Teilen des Blaupigmentes Heliogen® 7101 F der Firma BASF AG, 5,0 Teilen Aluminiumsilikat, 1,4 Teilen Calciummolybdat sowie 0,6 Teilen Zinkphosphat in einem Dissolver bis zur vollkommenen Homogenität dispergiert. Anschließend wird in einer Sandmühle gemahlen und die resultierende Pigmentpaste mit 9,3 Teilen deionisiertem Wasser, 4,0 Teilen Butylglykol, 38,9 Teilen der im Beispiel 2 hergestellten Emulsion, 0,6 Teilen Texanol® (Hersteller: Eastman Kodak) sowie deionisiertem Wasser und Verdickungsmittel komplettiert. Der hergestellte Wasserlack zeigt folgende Charakteristik:

| | Beispiel 4 |
|---|---|
| Trocknung bei 25°C | 30 min. |
| Glanz 60° Winkel | 60 |
| Wasserdampfresistenz 40°C, 240 h | 1 |
| Salzprühtest 240 h, Zn-phosphat | 1 |
| Resistenz Bremsflüssigkeit Tauchung, 24 h, 25°C | 1 |
| Notenskala: 1 = ausgezeichnet 5 = unbrauchbar | |

### Beispiel 5:

1716 Teile deionisiertes Wasser, 34,5 Teile Nonylphenylether - 23 EO (UX Ultrapon® NF 230°L der Firma Ultrachimica, = Emulgator 1), 1,1 Teile Ameisensäure, 4,85 Teile n-Dodecylmercaptan sowie 6,6 Teile Na-allylethersulfonat (Handelsname Cops® 1 der Firma Alcolac) werden vorgelegt und auf 90°C erwärmt. In einem Zulaufgefäß bereitet man aus 811 Teilen deionisiertem Wasser, 80 Teilen Nonylphenol- 23 EO-Natriumsulfat (Disponil® 25 S der Firma Henkel, = Emulgator 2), 10,6 Teilen Na-allylethersulfonat, 6,3 Teilen Dodecylmercaptan, 1512 Teilen Styrol, 579,4 Teilen Methylmethacrylat, 917,4 Teilen Butylacrylat, 77 Teilen Acrylsäure sowie 70,7 Teilen Acrylamid eine Emulsion. 10 % dieser Emulsion werden zur Vorlage gegeben. Dann werden 3,18 Teile Kaliumperoxodisulfat in 128 Teilen deionisiertem Wasser innerhalb von 5 Minuten zugegeben. Es tritt eine exotherme Reaktion ein. Die Reaktionstemperatur wird zwischen 90°C und 93°C gehalten. 15 Minuten nach Beendigung der Zugabe der Kaliumperoxodisulfat-Lösung werden die restlichen 90 % der Emulsion innerhalb von 2 Stunden zugegeben, gleichzeitig wird eine Lösung von 12 Teilen Kaliumperoxodisulfat in 483 Teilen deionisiertem Wasser innerhalb von 2 Stunden und 15 Minuten zugegeben, wobei die Reaktionstemperatur im Bereich von 90°C bis 92°C gehalten wird. Nach Beendigung der Zugabe wird noch 15 Minuten bei 90°C gehalten. Anschließend wird begonnen mit der Zugabe einer zweiten Emulsion, welche aus 1110 Teilen deionisiertem Wasser, 55,1 Teilen Emulgator 2, 792 Teilen Styrol, 811 Teilen Butylacrylat, 9,7 Teilen Na-allylethersulfonat (Cops 1® der Firma Alcolac) und 3,4 Teilen n-Dodecylmercaptan bereitet wird. Gleichzeitig wird eine Lösung von 6 Teilen Kaliumperoxodisulfat in 241 Teilen deionisiertem Wasser innerhalb von 90 Minuten zugegeben. Die Zugabe der Emulsion erfolgt innerhalb von 60 Minuten, wobei eine Reaktionstemperatur von 90°C bis 92°C gehalten wird. Nach Beendigung der Zugabe der Kaliumperoxodisulfat-Lösung hält man noch 30 Minuten bei 90°C und kühlt schließlich ab. Sobald die Temperatur auf 50°C gesunken ist, wird mit 60 Teilen 25 %iger Ammoniaklösung neutralisiert und mit 400 Teilen deionisiertem Wasser komplettiert. Die erhaltene Emulsion weist folgende Kenndaten auf:
Festkörper: 48,4 %
pH: 8,0
Viskosität (Brookfield Typ LVF, Spindel 3): 6300 mPas (23°C)
LD (440 nm): 30 %

### Beispiel 6: Wasserverdünnbarer Lack (gelb) für Metalloberflächen

28,2 Teile der im Beispiel 5 hergestellten Emulsion werden mit 4,95 Teilen Butylglykol, 0,2 Teilen eines Verlaufsadditivs, 0,2 Teilen Disperbyk® (Byk-Chemie), 0,6 Teilen Luaktin® (BASF AG), 6,95 Teilen deionisiertem Wasser, 12,5 Teilen Chromgelb, 0,6 Teilen des Rotpigments Sicomin® L 3130 S der Firma BASF AG, 2,6 Teilen Bariumsulfat, 2,6 Teilen Aluminiumsilikat und 1,5 Teilen Strontiumchromat in einem Dissolver dispergiert und anschließend in einer Sandmühle gemahlen. Dann wird mit 33,3 Teilen der im Beispiel 5 hergestellten Emulsion, 1 Teil Texanol® (Eastman Kodak), 0,1 Teilen Natriumnitrit, deionisiertem Wasser sowie einem Verdickungsmittel komplettiert. Der so hergestellte Lack zeigt folgende Eigenschaften:

| | Beispiel 6 |
|---|---|
| Trocknung 25°C | 30 min. |
| Glanz 60° | 60 |
| Wasserdampfresistenz 40°C, 240 h | 1 |
| Salzprühtest 240 h, Zn-phosphat | 1 |
| Resistenz Bremsflüssigkeit Tauchung, 24 h, 25°C | 1 |
| Notenskala: 1 = ausgezeichnet 5 = unbrauchbar | |

## Patentansprüche

1. Wasserverdünnbares Emulsionspolymerisat, hergestellt durch mehrstufige Emulsionspolymerisation von ethylenisch ungesättigten Monomeren in wäßriger Phase in Gegenwart eines Emulgators oder mehrerer Emulgatoren und eines oder mehrerer radikalbildender Initiatoren, wobei in der ersten Stufe der Emulsionspolymerisation Carboxylgruppen und Amidgruppen enthaltende ethylenisch ungesättigte Monomere polymerisiert werden und in der zweiten Stufe der Emulsionspolymerisation in Gegenwart des in der ersten Stufe hergestellten Emulsionspolymerisates ethylenisch ungesättigte Monomere ohne weitere funktionelle Gruppen polymerisiert werden,
dadurch gekennzeichnet, daß
in der ersten Stufe der Emulsionspolymerisation
(a1) 0,5 bis 5,0 Gew.-%, bevorzugt 1,0 bis 3,0 Gewichts-%, Carboxylgruppen enthaltende ethylenisch ungesättigte Monomere und
(a2) 0,5 bis 2,5 Gew.-%, bevorzugt 1,0 bis 2,0 Gew.-% olefinisch ungesättigte Carbonsäureamide,
wobei insgesamt 1,0 bis 8,0 Gew.-%, bevorzugt 2,0 bis 5,0 Gew.-% hydrophile ionische und hydrophile nichtionische olefinisch ungesättigte Monomere eingesetzt werden,
sowie
(b) 92,0 bis 99,0 Gew.-%, bevorzugt 95,0 bis 98,0 Gew.-% weitere ethylenisch ungesättigte Monomere, die mit den zuvor genannten hydrophilen ethylenisch ungesättigten Monomeren copolymerisierbar sind und keine weiteren funktionellen Gruppen enthalten,
polymerisiert werden, wobei die Summe der Monomeren in der ersten Stufe 100 Gew.-% beträgt,
und in der zweiten Stufe der Emulsionspolymerisation ausschließlich olefinisch ungesättigte Monomere ohne weitere funktionelle Gruppen polymerisiert werden und das Gewichtsverhältnis der in der ersten Stufe polymerisierten Monomeren zu den in der zweiten Stufe polymerisierten Monomeren 30 - 80 Gew.-% : 20 - 70 Gew.-% beträgt.

2. Wasserverdünnbares Emulsionspolymerisat nach Anspruch 1, dadurch gekennzeichnet, daß in der ersten Stufe der Emulsionspolymerisation bis zu 2,0 Gew.-% mehrfach ethylenisch ungesättigte Monomere, wobei die Summe der Monomeren der ersten Polymerisationsstufe 100 Gew.-% beträgt, verwendet worden sind.

3. Wasserverdünnbares Emulsionspolymerisat nach Anspruch 1 oder 2, dadurch gekennzeichnet, daß in der ersten Stufe der Emulsionspolymerisation Mischungen von Acrylsäure, Acrylamid, Styrol und Methylmethacrylat und in der zweiten Stufe der Emulsionspolymerisation Styrol und n-Butylacrylat verwendet worden sind.

4. Wasserverdünnbares Emulsionspolymerisat nach Anspruch 1 bis 3, dadurch gekennzeichnet, daß das Polymerisat durch mehr als zwei Polymerisationsstufen hergestellt worden ist, wobei in der dritten bzw. in der auf die zweite Polymerisationsstufe folgenden Stufen olefinisch ungesättigte Monomere ohne weitere funktionelle Gruppen polymerisiert worden sind.

5. Verfahren zur Herstellung eines wasserverdünnbaren Emulsionspolymerisates nach Anspruch 1 bis 4, dadurch gekennzeichnet, daß die Emulsionspolymerisation bei Temperaturen von 20°C bis 100°C, vorzugsweise bei 80°C bis 95°C durchgeführt wird.

6. Wäßrige Beschichtungszusammensetzung, enthaltend als filmbildendes Bindemittel das wasserverdünnbare Emulsionspolymerisat nach Anspruch 1 bis 4, welches mit Ammoniak und/oder Aminen zumindest zum Teil neutralisiert worden ist, sowie übliche Füllstoffe und Hilfsmittel und ggf. organische Lösemittel und Pigmente.

7. Verwendung des wasserverdünnbaren Emulsionspolymerisates nach Anspruch 1 bis 4 als Reibharz für Pigmentpasten.

8. Verwendung des wasserverdünnbaren Emulsionspolymerisates nach Anspruch 1 bis 4 als Dispergierharz in Dispergierprozessen.

9. Verwendung des wasserverdünnbaren Emulsionspolymerisates nach Anspruch 1 bis 4 als Bindemittel in physikalisch trocknenden Wasserlacken für metallische Oberflächen, Holz und mineralische Untergründe.

## Claims

1. Water-dilutable emulsion polymer which is prepared by multistep emulsion polymerization of ethylenically unsaturated monomers in the aqueous phase in the presence of an emulsifier or a plurality of emulsifiers and in the presence of one or more free radical-forming initiators, where the first step of the emulsion polymerization involves polymerization of ethylenically unsaturated monomers containing carboxyl groups and amide groups, and the second step of the emulsion polymerization involves polymerization of ethylenically unsaturated monomers containing no further functional groups in the presence of the emulsion polymer prepared in the first step, characterized in that
(a1) 0.5 to 5.0 % by weight, preferably from 1.0 to 3.0 % by weight, of ethylenically unsaturated monomers containing carboxyl groups, and
(a2) from 0.5 to 2.5 % by weight, preferably from 1.0 to 2.0 % by weight, of olefinically unsaturated carboxamides,
where a total of from 1.0 to 8.0 % by weight, preferably from 2.0 to 5.0 % by weight, of hydrophilic ionic and hydrophilic nonionic olefinically unsaturated monomers are employed,
and
(b) from 92.0 to 99.0 % by weight, preferably from 95.0 to 98.0 % by weight, of further ethylenically unsaturated monomers which are copolymerizable with the abovementioned hydrophilic ethylenically unsaturated monomers and contain no further functional groups,
are polymerized in the first step of the emulsion polymerization, where the total amount of monomers in the first step is 100 % by weight,
and exclusively olefinically unsaturated monomers containing no further functional groups are polymerized in the second step of the emulsion polymerization, and the weight ratio between the monomers polymerized in the first step and the monomers polymerized in the second step is from 30 - 80 % by weight : 20 - 70 % by weight.

2. Water-dilutable emulsion polymer according to Claim 1, characterized in that up to 2.0 % by weight of polyethylenically unsaturated monomers were used in the first step of the emulsion polymerization, the total amount of the monomers in the first polymerization step being 100 % by weight.

3. Water-dilutable emulsion polymer according to Claim 1 or 2, characterized in that mixtures of acrylic acid, acrylamide, styrene and methyl methacrylate were used in the first step of the emulsion polymerization and styrene and n-butyl acrylate were used in the second step of the emulsion polymerization.

4. Water-dilutable emulsion polymer according to Claim [sic] 1 to 3, characterized in that the polymer has been prepared by more than two polymerization steps, olefinically unsaturated monomers containing no further functional groups having been polymerized in the third step or in the steps following the second polymerization step.

5. Process for the preparation of a water-dilutable emulsion polymer according to Claim [sic] 1 to 4, characterized in that the emulsion polymerization is carried out at temperatures of from 20°C to 100°C, preferably from 80°C to 95°C.

6. Aqueous coating composition containing, as film-forming binder, the water-dilutable emulsion polymer according to Claim [sic] 1 to 4, which has been at least partially neutralized by means of ammonia and/or amines, and conventional fillers and assistants and if desired organic solvents and pigments.

7. Use of the water-dilutable emulsion polymer according to Claim [sic] 1 to 4 as grinding resin for pigment pastes.

8. Use of the water-dilutable emulsion polymer according to Claim [sic] 1 to 4 as dispersion resin in dispersion processes.

9. Use of the water-dilutable emulsion polymer according to Claim [sic] 1 to 4 as binder in physically drying aqueous lacquers for metallic surfaces, wood and mineral substrates.

## Revendications

1. Polymérisat d'émulsion hydrodiluable, préparé par une polymérisation en émulsion à plusieurs étapes de monomères éthyléniquement insaturés en phase aqueuse en présence d'un émulsifiant ou de plusieurs émulsifiants et d'un ou de plusieurs d'agents initiateurs radicalaires, étant donné que, dans la première étape de la polymérisation en émulsion, on procède à la polymérisation de monomères éthyléniquement insaturés contenant des groupements carboxyles et des groupements amino et que, dans la deuxième étape de la polymérisation en émulsion, en présence du polymérisat d'émulsion préparé dans la première étape, on procède à la polymérisation de monomères éthyléniquement insaturés sans groupements fonctionnels supplémentaires, caractérisé en ce que,
dans la première étape de la polymérisation en émulsion, l'on procède à la polymérisation
(a1) de 0,5 à 5,0 % en poids, de préférence de 1,0 à 3,0 % en poids, de monomères éthyléniquement insaturés contenant des groupements carboxyles et
(a2) de 0,5 à 2,5 % en poids, de préférence de 1,0 à 2,0 % en poids d'amides d'acides carboxyliques oléfiniquement insaturés,
de 1,0 à 8,0 % en poids, de préférence de 2,0 à 5,0 % en poids de monomères oléfiniquement insaturés hydrophiles ioniques et hydrophiles non ioniques étant utilisés,
ainsi que
(b) de 92,0 à 99,0 % en poids, de préférence de 95,0 à 98,0 % en poids de monomères éthyléniquement insaturés supplémentaires, qui sont copolymérisables avec les monomères éthyléniquement insaturés hydrophiles cités ci-dessus et qui ne contiennent aucun groupement fonctionnel supplémentaire,
la somme des monomères dans la première étape étant de 100 % en poids,
et en ce que, dans la deuxième étape de la polymérisation en émulsion, l'on procède à la polymérisation de monomères exclusivement oléfiniquement insaturés sans groupements fonctionnels supplémentaires et en ce que le rapport en poids des monomères polymérisés dans la première étape aux monomères polymérisés dans la deuxième étape est de 30 - 80 % en poids : 20 - 70 % en poids.

2. Polymérisat d'émulsion hydrodiluable selon la revendication 1, caractérisé en ce que, dans la première étape de la polymérisation en émulsion, l'on a utilisé jusqu'à 2,0 % en poids de monomères plusieurs fois éthyléniquement insaturés, la somme des monomères de la première étape de polymérisation étant de 100 % en poids.

3. Polymérisation d'émulsion hydrodiluable selon la revendication 1 ou 2, caractérisé en ce que, dans la première étape de la polymérisation en émulsion, l'on a utilisé des mélanges d'acide acrylique, d'acrylamide, de styrène et de méthacrylate de méthyle et que, dans la deuxième étape de la polymérisation en émulsion, l'on a utilisé du styrène et de l'acrylate de n-butyle.

4. Polymérisation d'émulsion hydrodiluable selon la revendication 1 à 3, caractérisé en ce que l'on a préparé le polymérisat grâce à plus de deux étapes de polymérisation, étant donné que, dans la troisième étape de polymérisation, respectivement dans les étapes suivant la deuxième étape de polymérisation, l'on a procédé à la polymérisation de monomères oléfiniquement insaturés sans groupements fonctionnels supplémentaires.

5. Procédé de préparation d'un polymérisat d'émulsion hydrodiluable selon la revendication 1 à 4, caractérisé en ce que l'on effectue la polymérisation en émulsion à des températures de 20°C à 100°C, de préférence de 80°C à 95°C.

6. Composition de revêtement aqueuse, contenant en tant que liant formateur de film le polymérisat d'émulsion hydrodiluable selon la revendication 1 à 4, qui a été neutralisé au moins partiellement à l'aide d'ammoniac et/ou d'amines, ainsi que des charges et des additifs et, le cas échéant, des solvants organiques et des pigments.

7. Utilisation du polymérisat d'émulsion hydrodiluable selon la revendication 1 à 4 en tant que résine de friction pour les pâtes pigmentaires.

8. Utilisation du polymérisat d'émulsion hydrodiluable selon la revendication 1 à 4 en tant que résine de mise en dispersion dans les processus de mise en dispersion.

9. Utilisation du polymérisat d'émulsion hydrodiluable selon la revendication 1 à 4 en tant que liant dans des laques séchant physiquement pour des surfaces métalliques, le bois et des subjectiles minéraux.
